# EUROPÄISCHE PATENTANMELDUNG

(11) **EP 0 646 494 A2**
(43) Veröffentlichungstag der Anmeldung: **05.04.1995**
(21) Anmeldenummer: 94113471.0
(22) Anmeldetag: 29.08.1994
(51) Int. Cl.: B60P 1/38, B60P 1/00

(54) **Lastfahrzeug**

(30) Priorität: 02.09.1993 DE 9313204 U
(71) Anmelder: FELDBINDER & BECKMANN FAHRZEUGBAU oHG, D-21423 Winsen/Luhe (DE)
(72) Erfinder: Beckmann, Jan-Dirk, D-21423 Winsen/Luhe (DE); Feldbinder, Otto, D-29643 Neuenkirchen (DE)
(74) Vertreter: Richter, Werdermann & Gerbaulet

(57) **Zusammenfassung**

Um ein Lastfahrzeug (100) mit einem bewegbaren Ladeboden (19), bestehend aus einem Rahmen (10) mit einem daran angeordneten Fahrwerk (12) und einer Auflagekupplung (10a), mit einem auf dem Rahmen (10) befestigten Aufbau (11) mit einem etwa trichterförmigen Innenquerschnitt (11a) und einer unteren Austrittsöffnung (22) und einer zum Entladen zu öffnenden Rückwand (17), wobei der Ladeboden (19) aus einer im Rahmen (10) angeordneten Entladeeinrichtung (21), mittels der in dem Aufbau (11) eingeladene Güter nach Öffnen der Rückwand (17) aus dem Aufbau (11) entladbar sind, besteht und die Entladeeinrichtung (21) ein Transportband (20) aufweist, das die untere Austrittsöffnung (22) im wesentlichen abschließt, dahingehend zu verbessern, daß vom Führerhaus eines Sattelschlepperzugfahrzeugs Informationen über den Entladungsvorgang erhalten werden können, wird vorgeschlagen, daß die Rückwand (17) als eine an einer im Bereich eines oberen Aufbaurandes (11b) drehbar im Aufbau (11) gelagerten Schwenkachse (23) befestigten Pendelklappe (18) ausgebildet ist, oder
daß die Rückwand (17) als eine im Bereich eines oberen Aufbaurandes (11b) drehbar im Aufbau (11) gelagerte Pendelklappe (18) ausgebildet und ggf. mit einer Schwenkachse (23) drehfest verbunden ist.

## Beschreibung

Die Erfindung betrifft ein Lastfahrzeug mit einem bewegbaren Ladeboden, bestehend aus einem Rahmen mit einem daran angeordneten Fahrwerk und einer Auflagekupplung, mit einem auf dem Rahmen befestigten Aufbau mit einem etwa trichterförmigen Innenquerschnitt und einer unteren Austrittsöffnung und einer zum Entladen zu öffnenden Rückwand, wobei der Ladeboden aus einer im Rahmen angeordneten Entladeeinrichtung, mittels der in den Aufbau eingeladene Güter nach Öffnen der Rückwand aus dem Aufbau entladbar sind, besteht und die Entladeeinrichtung ein Transportband aufweist, das die untere Austrittsöffnung im wesentlichen abschließt.

Sattelschlepper mit einer Zugmaschine und einem Sattelanhänger, der Spezialaufbauten aufweist, z.B. Behälter zur Aufnahme von flüssigem oder festem Schüttgut, die von oben befüllbar und über einen entsprechenden Austrag entleerbar sind, sind in den verschiedensten Ausführungen bekannt.

So ist aus der US-A 46 64 583 bereits ein Lastfahrzeug der eingangs genannten Art bekannt, bei dem in dem auf dem Fahrgestell auflagernden Fahrzeugrahmen eine Förderkette um Umlenkritzel umläuft, auf der ein aus einzelnen Bandsegmenten bestehendes Transportband angeordnet ist, wobei sich die Bandelemente so überlagern, daß insgesamt ein umlaufendes Transportband gebildet wird. Auch der dortige Aufbau weist einen trichterförmigen bzw. V-förmigen Innenquerschnitt auf, wobei die Seitenwände des Aufbaues in ihrem unteren, dem Ladeboden zugewandten Bereich einen Abstand aufweisen, der der Breite des direkt unter den Seitenwänden verlaufenden und den Ladeboden bildenden Transportbandes entspricht. Die oberen Kanten der Seitenwände weisen dabei einen der Fahrzeugbreite in etwa entsprechenden Abstand auf, so daß sich insgesamt der V-förmige Querschnitt ergibt, wobei die feststehende Vorderwand und die zum Entladen zu öffnende Rückwand etwa vertikal angeordnet sind.

Einen ähnlichen Grundaufbau weist auch der Lastkraftwagen gemäß DE-U 77 25 256 auf.

Bei allen diesen bekannten Fahrzeugen tritt das Problem auf, daß eine Entladung möglichst vom Führerhaus des Zugfahrzeuges durchführbar sein soll, wobei es insbesondere wünschenswert ist, bei sich bewegendem Fahrzeug den Entladungsvorgang kontrollieren zu können.

Es ist daher Aufgabe der vorliegenden Erfindung ein Lastfahrzeug der eingangs genannten Art dahingehend zu verbessern, daß vom Führerhaus eines Sattelschlepperzugfahrzeugs Informationen über den Entladungsvorgang erhalten werden können.

Diese Aufgabe wird durch die im Anspruch 1 gekennzeichneten Merkmale gelöst.

Die Verwendung einer drehbar im Aufbau gelagerten Schwenkachse für die Pendelklappe ermöglicht es, mit einfachen Mitteln die Verschwenkung der Pendelklappe festzustellen. Hierbei ist es möglich, die Drehung der Schwenkachse durch Winkelgeber, Sensoren oder andere geeignete Erfassungseinrichtungen zu erfassen und ein Signal für den Fahrer zu erzeugen. Es kann dabei eine Übertragung mechanisch, elektrisch, optisch oder auch pneumatisch zu einer entsprechenden Anzeigeeinrichtung erfolgen. Dadurch, daß die Schwenkachse mit einer dann die Schwenkstellung der Pendelklappe anzeigenden Anzeigeeinrichtung verbunden ist, wird dem Fahrer des Fahrzeugs immer eine Information darüber vermittelt, ob der Entladungsvorgang läuft, da die Pendelklappe ja vom Ladegut selbst, das auf der Transporteinrichtung transportiert wird, geöffnet wird. Bei völliger Entleerung des Aufbaues oder beim Stoppen der Transporteinrichtung ist an der Anzeigeeinrichtung feststellbar, daß sich entweder die Pendelklappe nicht mehr bewegt oder in ihrer Ausgangsstellung zurückschwingt.

Bei einer bevorzugten Ausführungsform ist dabei vorgesehen, daß die Schwenkachse an mindestens einer Fahrzeugseite direkt oder indirekt aus dem Aufbau herausgeführt und an ihrem auskragenden Ende mit der Anzeigeeinrichtung verbunden ist. Diese besteht dann bevorzugterweise aus einem sich rechtwinklig zur Schwenkachse erstreckenden Anzeigeelement, das ein Winkarm od.dgl. sein kann.

Gemäß einer bevorzugten Ausführungsform ist vorgesehen, daß die Pendelklappe an ihrem unteren, der Transporteinrichtung zugewandten Rand mit einer Verriegelungseinrichtung versehen ist, die bevorzugterweise aus einem plattenförmigen Verriegelungssegment besteht, das eine der Querschnittsform des Aufbaues angepaßte Formgebung aufweist und über Scharnierverbindungen mit der Pendelklappe verbunden ist. Dabei ist bevorzugterweise vorgesehen, daß das Pendeln des Segments nur zur Außenseite des Fahrzeuges hin möglich ist. Weiterhin ist vorgesehen, daß das Verriegelungssegment zusammen mit der Pendelklappe eine größere Vertikalerstreckung haben als das eigentliche Querschnittsprofil. Die Höhe der Pendelklappe zuzüglich dem Verriegelungssegment liegt bevorzugterweise 10 mm über der vorhandenen lichten Höhe. Hierdurch wird ein ganz besonderer Vorteil erreicht. Beim Schließen der Klappe, nachdem das Fahrzeug entladen ist, ist es möglich, daß ein entsprechender Antrieb oder der Fahrer die Pendelklappe mit Schwung in Richtung Innenraum, d.h. in Richtung des Laderaums hineindrückt. Das Verriegelungssegment schleift dabei kurzzeitig über das Transportband, das grundsätzlich eine gewisse Elastizität aufweist.

Beim Zurückpendeln der Pendelklappe verkeilt sich das Verriegelungssegment zwischen dem Förderband und dem Anschlag an der Pendelklappe, der verhindert, daß ein Pendeln des Verriegelungssegmentes zur Innenseite des Sattelschlepperanhängers hin möglich ist. Die gesamte Pendelklappe steht nun leicht in den Laderaum geneigt. Dies blockiert, so daß grundsätzlich eine Aufnahme von Ladegut im Aufbau, d.h. also ein Beladen erfolgen kann.

Wenn nun die Entleerung des Laderaums durchgeführt werden soll, wird die Antriebseinrichtung der Transporteinrichtung in Bewegung gesetzt. Dabei gibt das Transportband im Bereich des Verriegelungssegmentes nach unten nach, wobei hier die Elastizität entsprechend, beispielsweise ebenfalls 10 mm bei dem vorausberechneten Druck gewählt wird oder die Transportkette, auf der das Transportband aufliegt, in diesem Bereich federnd geführt ist. Die mit dem Verriegelungssegment auf dem Transportband aufliegende Pendelklappe wird dann von dem Transportband und der Ladung über den Totpunkt nach außen gedrückt. In Abhängigkeit vom Ladegut wird dann die Pendelklappe beim Entladungsvorgang jeweils mehr oder weniger aufgedrückt. Den Öffnungswinkel der Pendelklappe kann dann die Bedienperson über die voranstehend beschriebene Anzeigeeinrichtung erkennen.

Um ein unbeabsichtigtes Entleeren des Ladegutes durch Öffnen der Pendelklappe sicher auszuschließen, ist an der Pendelklappe eine Sicherheitseinrichtung gegen ein ungewolltes Öffnen der Pendelklappe vorgesehen.

Hierbei kann es sich um mechanische Riegel, elektromagnetische Sperren, hydraulisch oder pneumatisch betätigbare Schlösser od.dgl. handeln.

Bevorzugterweise besteht die Sicherheitseinrichtung aus einer mechanischen Sicherheitsverriegelung. Bevorzugterweise ist vorgesehen, daß die Sicherheitsverriegelung einen auf der Außenseite der Pendelklappe um eine vertikale Achse schwenkbaren Rahmen aufweist, der in eine an der Pendelklappe anliegende Entleerungsstellung und in eine zur Pendelklappe einen Winkel bildende Fahrt- und Sicherungsstellung schwenkbar ist.

Dabei ist vorgesehen, daß der Rahmen durch einen trapezförmigen Metallbügel gebildet wird, dessen obere Seite in der Fahrt- und Sicherungsstellung an einen an dem Aufbau im Schwenkbereich des Metallbügels angeordneten, senkrecht und seitlich wirkenden Anschlag anlegbar ist und dessen einer Schenkel über mindestens eine Scharnierverbindung an der Pendelklappe angelenkt ist. Der Metallbügel wird während der Fahrt vorzugsweise in eine rechtwinklige Stellung zur Pendelklappe geschwenkt und liegt dann mit seiner Oberseite an dem Anschlag an. Dabei ist bevorzugterweise vorgesehen, daß der Anschlag eine Rasteinrichtung aufweist, so daß ein ungewolltes Verschwenken des Metallbügels ausgeschlossen wird. Somit ist ein Aufpendeln der Pendelklappe während der Fahrt nicht möglich. Vor Beginn der Entleerung wird dann der Metallbügel um 90^{o} gedreht und sollte flach an der Pendelklappe anliegend arretiert werden.

Gemäß einer bevorzugten Ausgestaltung ist dann noch vorgesehen, daß der Anschlag einen durch Anlegen des Metallbügels betätigbaren Schalter zur Ein-Aus-Steuerung eines Antriebs der Transporteinrichtung aufweist. Hierdurch wird ausgeschlossen, daß versehentlich die Transporteinrichtung eingeschaltet wird, wenn die Pendelklappe noch nicht freigegeben ist. Somit kann vermieden werden, daß ein erhöhter Verschleiß an dem Förderband auftritt, der dann eintritt, wenn das Förderband bewegt wird und das Ladegut nicht austreten kann, so daß sich eine Reibung zwischen dem Ladegut und dem Förderband ergibt.

Um nicht nur den Verschleiß am Förderband gering zu halten, sondern dieses auch einfach wieder instandsetzen zu können, ist vorgesehen, daß das Transportband ein- oder mehrteilig ausgebildet ist und jede Bandverbindung an der oder den Stoßstellen durch eine metallische Scharnierverbindung mit mindestens einer eingezogenen Metallseele gebildet ist. Hierdurch kann das Band an jeder beliebigen Stelle instandgesetzt oder teilersetzt werden.

Weiterhin ist vorgesehen, daß das Transportband auf von zwei voneinander beabstandeten Stahlketten gelagert ist, die durch ebenfalls voneinander beabstandete und mit jeweils einem Ende mit einem Glied einer der Stahlketten verbundene Querträger untereinander verbunden sind. Diese Ketten sind dabei weitgehendst verschleißfrei konzipiert und es ist bevorzugterweise vorgesehen, daß der Kettenrücklauf der das Transportband tragenden umlaufenden Stahlketten so ausgebildet ist, daß die Untenführung der Stahlketten auf verschleißarmen Schienen aus gleitfähigem Kunststoffmaterial erfolgt. Weiterhin ist vorgesehen, daß die die Stahlketten verbindenden Querträger aus korrosionsfestem Edelstahl gefertigt sind und daß an den Querträgern das Transportband mittels korrosionsfesten Nieten befestigt ist.

In den Umlenkbereichen, d.h. an den Führungsritzeln der Stahlkette, sind in an sich bekannter Weise Kettenspanner angeordnet, so daß bei Normalbetrieb die Transporteinrichtung wartungsfrei bzw. wartungsarm betrieben werden kann.

Um eine Reinigung des Transportbandes vom Massengut vor dem Rücklauf als unterer Trum durchzuführen und gleichzeitig das aus dem Laderaum herausgeführte Ladegut so vom Fahrzeug wegzuleiten, daß eine ständige Entladung erfolgen kann, ist vorgesehen, daß im Austrittsbereich der Transporteinrichtung am hinteren Umlenkbereich des Transportbandes ein Abstreifer mit einem daran angeschlossenen Leitblech vorgesehen ist. Diese sind miteinander verbunden und sie können auch einstückig sein, wobei der Vorteil ist, daß dieses Bauteil, das beide Funktionen integriert, im Regelfall einem gleichmäßigen Verschleiß unterworfen ist, so daß dann sinnvollerweise zu gegebener Zeit auch ein gemeinsamer Austausch erfolgt. Um jedoch eine möglichst lange Einsatzdauer zu gewährleisten, ist vorgesehen, daß der Abstreifer zum Ausgleich bei Verschleiß über eine Langlochschiene von außen nachstellbar ausgebildet ist.

Um die Wartungs- und Instandhaltungsarbeiten immer durchführen zu können und um dem Betreiber eines solchen Fahrzeuges auch an jedem Einsatzplatz, beispielsweise einen Teilaustausch des Transportbandes und unter der schrägstehenden Vorderwand des Aufbaues zu ermöglichen, ist vorgesehen, daß vorne, oberhalb des vorderen Umlenkbereiches des Transportbandes der an sich bekannte Hohlraum als Stauraum ausgebildet ist, der u.a. zur Aufnahme von Werkzeugen und Ersatzteilen einsetzbar ist. In dem Stauraum kann auch ein sog. Power-Pack angeordnet werden, d.h. ein Diesel- oder Elektromotor in Verbindung mit einer Hydraulikpumpe, so daß ein Eigenantrieb für die Transporteinrichtung unabhängig vom Zugfahrzeug möglich ist.

Um den Transport von heißen Gütern zu ermöglichen, ist nicht nur das Transportband gegen Hitze und auch chemische Einflüsse beständig ausgebildet, sondern auch die Teile des Aufbaues, die eine an sich bekannte Isolierung aufweisen, sind, wie das gesamte Fahrzeug, aus besonderem hitzefesten Material hergestellt. Bevorzugterweise ist nämlich vorgesehen, daß das gesamte Lastfahrzeug, d.h. Aufbau und Rahmen, in Vollaluminiumbauweise ausgeführt ist und einen nahezu vollständig geschweißten, selbständig tragenden Aufbau aus AL-Mg2Mn 0,8 als Werkstoff aufweist. Dieser Werkstoff ist bis zu 250 Grad Celsius hitzefest.

Vorteilhafte Ausgestaltungen und zweckmäßige Weiterbildungen der Erfindung sind in den Unteransprüchen gekennzeichnet.

Ein Ausführungsbeispiel der Erfindung wird nachstehend anhand der Zeichnung näher erläutert. Es zeigen
- **Fig.1**: in einer Seitenansicht das erfindungsgemäße Lastfahrzeug in schematischer Darstellung,
- **Fig.2**: in einer Ansicht von hinten das Lastfahrzeug gemäß Figur 1,
- **Fig.3**: in einer rein schematischen vergrößerten Teildarstellung eine Sicherheitseinrichtung für die Pendelklappe in ihrer Fahrt- und Sicherungsstellung,
- **Fig.4**: in einer um 90 Grad gedrehten Ansicht die Sicherheitseinrichtung gemäß Fig. 3 in ihrer Entleerungsstellung,
- **Fig.5**: in einer Seitenansicht die Sicherheitseinrichtung gemäß Fig. 4,
- **Fig.6u.7**: in reinen Prinzipdarstellungen das Wirkprinzip der sich selbst verriegelnden Pendelklappe,
- **Fig.8**: in einer Seitenansicht eine vergrößerten Prinzipdarstellung des Transportbandes und eine Stahlkette, und
- **Fig.9**: in einer gegenüber Fig.8 verkleinerten Ansicht das Transportband gem. Fig.8 von oben.

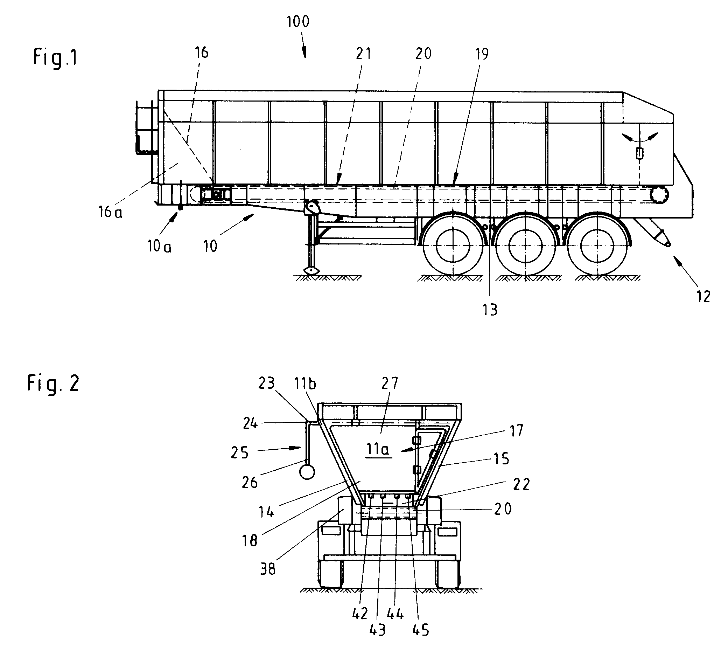

In Fig.1 und 2 ist ein Lastfahrzeug 100 dargestellt, bei dem auf einem Rahmen 10 ein Aufbau 11 angeordnet ist, der zur Aufnahme und den Transport von insbesondere kleinstückigen Massengütern wie Sand, Steine, Schlacken, Asphalt od.dgl. dient. Unterhalb des Rahmens 10 ist das Fahrwerk 12 angeordnet, das als dreiachsiges Fahrgestell 13 ausgebildet ist. Der Aufbau 11 ist dabei in Vollaluminiumbauweise gestaltet, wobei es sich um einen nahezu vollständig verschweißten, selbständig tragenden Aufbau aus AL-Mg2Mn 0,8 handelt, der bis zu 250 Grad Celsius hitzefest ist. Auch der Fahrzeugrahmen 10 besteht einschließlich der Achsblöcke aus Aluminium, so daß insgesamt eine besonders leichte Konstruktion gefunden werden konnte. Die Seitenwände 14,15 und die Vorderwand 16 sind dabei in an sich bekannter Weise doppelwandig ausgebildet und mit einer Isolierung versehen. Die Rückwand 17 wird von einer dem V-förmigen Profil des Innenquerschnitts 11a des Aufbaues 11 entsprechend geformten Pendelklappe 18 gebildet, die zum Öffnen des Aufbaues 11 dient, um den Austritt des Ladegutes zu ermöglichen.

Der Ladeboden 19 des Aufbaues 11 wird von dem Transportband 20 einer Entladeeinrichtung 21 gebildet, daß die sich zwischen den Seitenwänden 14,15 unten ergebende Austrittsöffnung 22 verschließt, so daß eingeladenes Ladegut auf dem Transportband 20 bzw. auf den schrägen Seitenwänden 14,15 und der schrägen Vorderwand 16 auflagert.

Unter der Vorderwand 16 befindet sich der Stauraum 16a.

Die zum Entladen des Aufbaues 11 zu öffnende Pendelklappe 18 ist an einer am oberen Aufbaurand 11b drehbar gelagerten Schwenkachse befestigt und aufgehängt und mit dieser drehfest verbunden. Die Schwenkachse 23 ist dabei mit ihrem Ende 24 aus dem Aufbau 11 herausgeführt und trägt dort die Anzeigeeinrichtung 25, die als sich rechtwinklig zur Schwenkachse erstreckendes Anzeigeelement 26 in Form eines Winkarms mit einem endseitig angeordneten Teller ausgebildet ist. Insbesondere an der sich optisch ergebenden Form des Tellers kann der Fahrer die Schwenkstellung der Pendelklappe 18 erkennen, denn bei fortschreitendem Ausschwenken der Pendelklappe 18 ergibt sich eine ellyptische Form des Tellers.

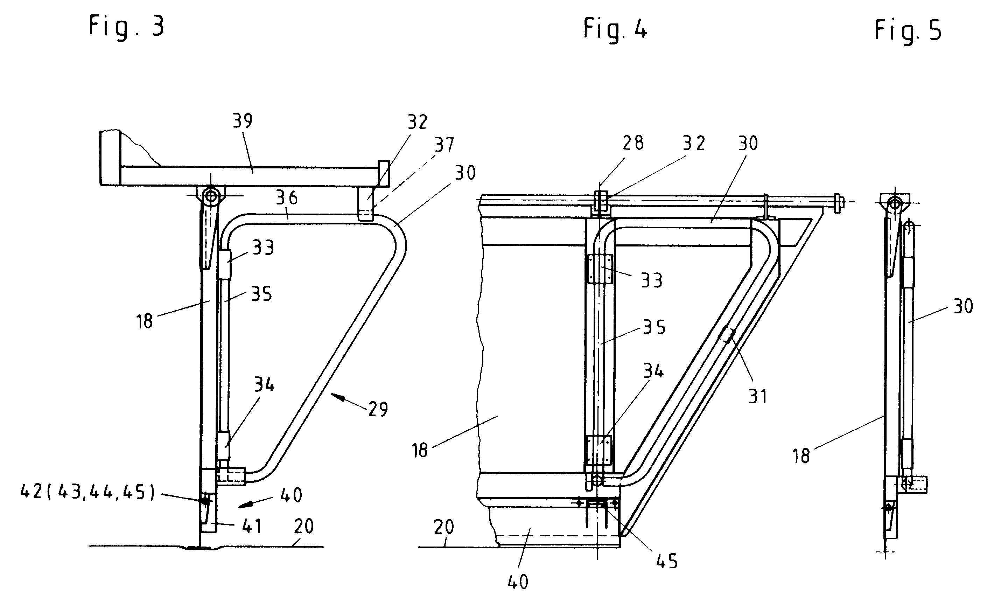

Die Pendelklappe 18 ist gegen ein ungewolltes Öffnen mit einer Sicherheitseinrichtung versehen, die in den Fig. 3 bis 5 dargestellt ist und die aus einem auf der Außenseite 27 der Pendelklappe 18 angeordneten Rahmen 29 besteht. Dieser ist als trapezförmiger Metallbügel 30 ausgebildet und um eine vertikale Achse 28 schwenkbar an der Pendelklappe 18 befestigt. Der Metallbügel 30 kann dabei in seine in Fig. 3 dargestellte Fahrtund Sicherungsstellung verschwenkt werden und in seine in Fig. 4 und 5 dargestelte Entleerungsstellung, in der er über in der Zeichnung angedeutete Arretierungselemente, beispielsweise in Form einer Klemmvorrichtung 31, an der Pendelklappe 18 anliegend gehalten wird.

In seiner Fahrt- und Sicherungsstellung liegt der Metallbügel 30 an einem Anschlag 32 an, der ihn senkrecht und seitlich abstützt und der bevorzugterweise einen Rastnocken od.dgl. aufweist, um ein versehentliches Verschwenken des Metallbügels 30 aus dieser Stellung zu vermeiden. Wenn der Metallbügel 30, der über in der Zeichnung angedeutete Scharnierverbindungen 33, 34 mit seinem einen Schenkel 35 an der Pendelklappe 18 angelenkt ist, in die Fahrt- und Sicherungsstellung verschwenkt wird und mit seinem oberen Seitenarm 36 in den Anschlag 32 einrastet, wird gleichzeitig ein dort angeordneter Schalter 37 betätigt, der eine in Fig.2 nur angedeutete Antriebseinrichtung 38 der Entladeeinrichtung 21 ausschaltet bzw. blockiert, so daß kein versehentlicher Antrieb der Entladeeinrichtung 21 erfolgen kann.

Der Anschlag 32 mit dem Schalter 37 ist dabei in einem dachartigen Abschnitt 39 des Aufbaues 11 angeordnet, der den Öffnungsbereich der Pendelklappe 18 und damit den Austrittsbereich des Ladegutes vordachartig übergreift.

Die Pendelklappe 18 ist dabei noch mit einer zusätzlichen Verriegelungseinrichtung 40 versehen, wozu sie an ihrem unteren, dem Transportband 20 zugewandten Rand 18a ein plattenförmiges Verriegelungssegment 41 aufweist, das in seiner Formgebung die Form der Pendelklappe 18 fortsetzt und über Scharnierverbindungen 42,43,44,45 schwenkbar an der Pendelklappe 18 angelenkt ist. Die Scharnierverbindungen 42-45 sind dabei derart gestaltet, daß ein Pendeln des Verriegelungssegments 41 nur zur Außenseite des Lastfahrzeugs 100 hin möglich ist. Die Gesamthöhe der Pendelklappe 18 und des Verriegelungssegmentes ist dabei geringfügig höher als die lichte Höhe des Innenquerschnitts des Aufbaues 11, so daß zum Schließen der Klappe die Pendelklappe 18 mit Schwung in den Laderaum hineingedrückt wird, wobei das Verriegelungssegment 41 kurzzeitig über das Transportband 20 schleift und einen sich ergebenden Totpunkt überwindet. Beim Zurückpendeln der Pendelklappe 18 verkeilt sich das Verriegelungssegment 41 zwischen dem Transportband 20 und den Anschlägen in den Scharnierverbindungen 42-45, so daß die Pendelklappe dann ganz leicht in den Laderaum geneigt (in der Zeichnung nicht dargestellt) klemmend gehaltert ist.

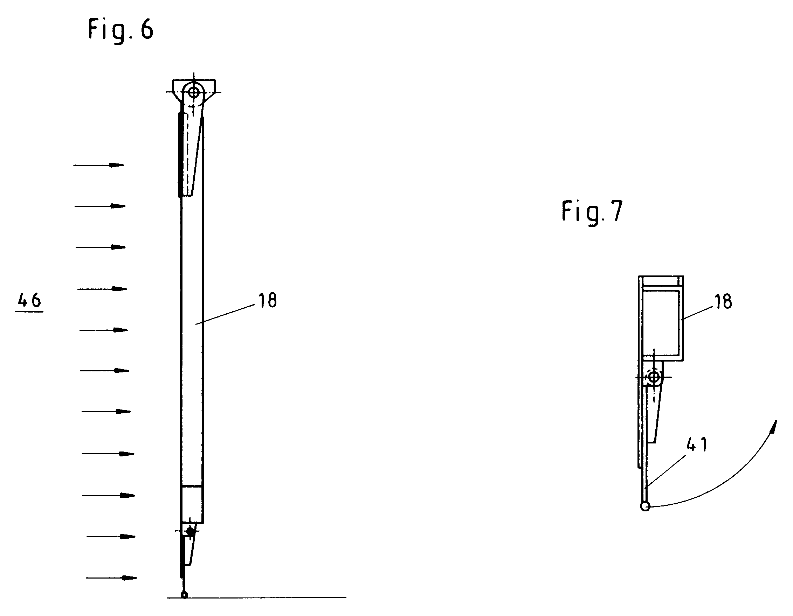

Zum Entleeren des Laderaumes wird das Transportband 20 in Bewegung gesetzt. Dabei gibt das Transportband 20 im Bereich des Verriegelungssegmentes 41 nach unten nach (wie angedeutet in Fig.3), und das Verriegelungssegment 41 schwingt nach Überwindung des Totpunktes nach außen (Fig.7). Die Pendelklappe 18 wird dann vom in der Zeichnung bei 46 in Fig.6 angedeuteten Ladegut nach außen gedrückt. In Abhängigkeit vom Ladegut 46 wird die Pendelklappe 18 beim Entleerungsvorgang mehr oder weniger aufgedrückt.

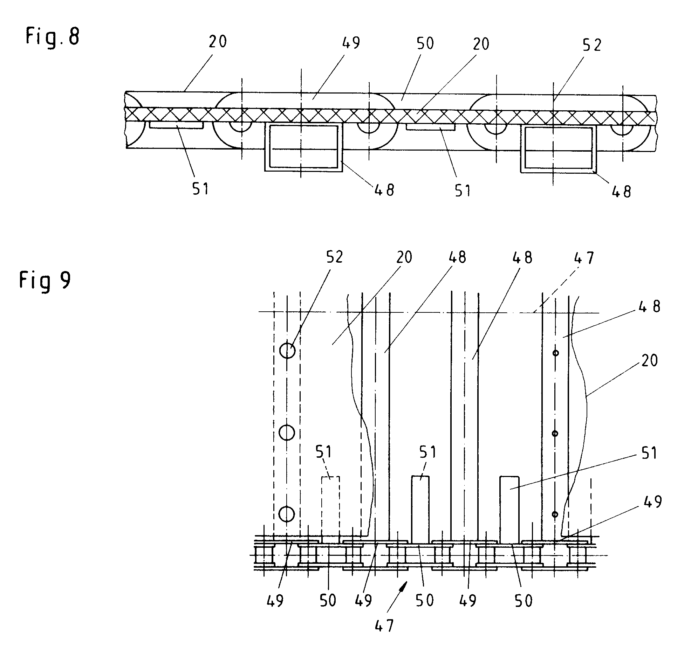

In den Fig. 8 und 9 ist das auf zwei miteinander verbundenen Stahlketten gelagerte Transportband 20 der Entladeeinrichtung 21 ausschnittsweise dargestellt. Die Stahlketten 47, von denen nur eine in der Zeichnung dargestellt ist, sind als umlaufende Gliederketten ausgebildet und werden über die in Fig.1 angedeuteten Ritzel des Antriebes 38 angetrieben. Die Stahlketten 47 sind über Querträger 48 miteinander verbunden und bilden so die Förderkette, auf der das Transportband 20 aufliegt. Die Stahlketten 47 sind dabei nach Art der Buchsen- oder Rollenketten aufgebaut. An den jeweils äußeren Gliedern 49 auf der der gegenüberliegenden Stahlkette 47 zugewandten Seite der Stahlketten 47 greifen die Querträger 48 an, während an den jeweils inneren Gliedern 50 zur gegenüberliegenden Stahlkette 47 gerichtete Träger 51 in Form von Blechen angeordnet sind. Die Querträger 48 und die Träger 51 tragen das Transportband 20, das über Nieten 52 an den Querträgern 48 befestigt ist. Das Transportband 20 hitze- und chemiebeständig ausgebildet und wird als beschichtetes Gewebeband eingesetzt. Die Ableitung des Ladegutes 46 vom Transportband 20 erfolgt über einen Abstreifer 53 (Fig.2) mit einem daran angeschlossenen Leitblech, der über eine in der Zeichnung nicht dargestellte Nachstelleinrichtung verstellbar ist. Diese kann auch automatisch arbeiten und es ist auch möglich, den Abstreifer mit regelbarem hydraulischen oder pneumatisch erzeugtem Andruck an das Transportband 20 zu drücken, um eine optimale Anpressung und Reinigung zu erzielen.

## Patentansprüche

1. Lastfahrzeug (100) mit einem bewegbaren Ladeboden (19), bestehend aus einem Rahmen (10) mit einem daran angeordneten Fahrwerk (12) und einer Auflagekupplung (10a), mit einem auf dem Rahmen (10) befestigten Aufbau (11) mit einem etwa trichterförmigen Innenquerschnitt (11a) und einer unteren Austrittsöffnung (22) und einer zum Entladen zu öffnenden Rückwand (17), wobei der Ladeboden (19) aus einer im Rahmen (10) angeordneten Entladeeinrichtung (21), mittels der in dem Aufbau (11) eingeladene Güter nach Öffnen der Rückwand (17) aus dem Aufbau (11) entladbar sind, besteht und die Entladeeinrichtung (21) ein Transportband (20) aufweist, das die untere Austrittsöffnung (22) im wesentlichen abschließt,
dadurch gekennzeichnet,
daß die Rückwand (17) als eine an einer im Bereich eines oberen Aufbaurandes (11b) drehbar im Aufbau (11) gelagerten Schwenkachse (23) befestigten Pendelklappe (18) ausgebildet ist, oder
daß die Rückwand (17) als eine im Bereich eines oberen Aufbaurandes (11b) drehbar im Aufbau (11) gelagerte Pendelklappe (18) ausgebildet und ggf.mit einer Schwenkachse (23) drehfest verbunden ist.

2. Lastfahrzeug nach Anspruch 1,
dadurch gekennzeichnet,
daß die Schwenkachse (23) mit einer die Schwenkstellung der Pendelklappe (18) anzeigenden Anzeigeeinrichtung (25) verbunden ist.

3. Lastfahrzeug nach Anspruch 2,
dadurch gekennzeichnet,
daß die Schwenkachse (23) an mindestens einer Fahrzeugseite direkt oder indirekt aus dem Aufbau (11) herausgeführt und an ihrem auskragenden Ende (24) mit der Anzeigeeinrichtung (25) verbunden ist.

4. Lastfahrzeug nach Anspruch 3,
dadurch gekennzeichnet,
daß die Anzeigeeinrichtung (25) ein sich rechtwinklig zur Schwenkachse (23) erstreckendes Anzeigeelement (26) ist.

5. Lastfahrzeug nach einem der Ansprüche 1 bis 4,
dadurch gekennzeichnet,
daß die Pendelklappe (18) an ihrem unteren, dem Transportband (20) zugewandten Rand (18a) mit einer Verriegelungseinrichtung (40) versehen ist.

6. Lastfahrzeug nach Anspruch 5,
dadurch gekennzeichnet,
daß die Verriegelungseinrichtung (40) aus einem plattenförmigen Verriegelungssegment (41) besteht, das eine der Querschnittsform des Aufbaues (11) angepaßte Formgebung aufweist und über Scharnierverbindungen (42,43,44,45) mit der Pendelklappe (18) verbunden ist.

7. Lastfahrzeug nach Anspruch 6,
dadurch gekennzeichnet,
daß die Scharnierverbindungen (42,43,44,45) Anschläge aufweisen, die derart gestaltet sind, daß ein Pendeln des Verriegelungssegments (41) nur zur Außenseite des Lastfahrzeugs (100) hin möglich ist.

8. Lastfahrzeug nach einem der Ansprüche 1 bis 7,
dadurch gekennzeichnet,
daß an der Pendelklappe (18) eine Sicherheitseinrichtung gegen ein ungewolltes Öffnen der Pendelklappe (18) vorgesehen ist.

9. Lastfahrzeug nach Anspruch 8,
dadurch gekennzeichnet,
daß die Sicherheitseinrichtung aus einer mechanischen Sicherheitsverriegelung besteht.

10. Lastfahrzeug nach Anspruch 9,
dadurch gekennzeichnet,
daß die Sicherheitsverriegelung einen auf der Aussenseite (27) der Pendelklappe (18) um eine vertikale Achse (28) schwenkbaren Rahmen (29) aufweist, der in eine an der Pendelklappe (18) anliegende Entleerungsstellung und eine zur Pendelklappe (18) einen Winkel bildende Fahrt- und Sicherheitsstellung schwenkbar ist.

11. Lastfahrzeug nach Anspruch 10,
dadurch gekennzeichnet,
daß der Rahmen (29) ein trapezförmiger Metallbügel (30) ist, dessen oberer Seitenarm (36) in der Fahrt- und Sicherheitsstellung an einem an dem Aufbau (11) im Schwenkbereich des Metallbügels (30) angeordneten, senkrecht und seitlich wirkenden Anschlag (32) anlegbar ist und dessen einer Schenkel (35) über mindestens eine Scharnierverbindung (33,34) an der Pendelklappe (18) angelenkt ist.

12. Lastfahrzeug nach Anspruch 11,
dadurch gekennzeichnet,
daß der Anschlag (32) einen durch Anlegen des Metallbügels (30) betätigbaren Schalter (37) zur Ein-Aus-Steuerung einer Antriebseinrichtung (38) der Entladeeinrichtung (21) aufweist.

13. Lastfahrzeug nach einem der Ansprüche 1 bis 12,
dadurch gekennzeichnet,
daß das Transportband (20) ein- oder mehrteilig ausgebildet und jede Bandverbindung an der oder den Stoßstellen durch eine metallische Scharnierverbindung mit mindestens einer eingezogenen Metallseele gebildet ist.

14. Lastfahrzeug nach Anspruch 13,
dadurch gekennzeichnet,
daß das Transportband (20) auf zwei voneinander beabstandeten Stahlketten (47) gelagert ist, die durch ebenfalls voneinander beabstandete und mit mindestens einem Ende fest mit je einem Glied einer der Stahlketten verbundene Querträger (48) untereinander verbunden sind.

15. Lastfahrzeug nach Anspruch 14,
dadurch gekennzeichnet,
daß der Kettenrücklauf der das Transportband (20) tragenden umlaufenden Stahlketten (47) so ausgebildet ist, daß die Untenführung der Ketten (47) auf verschleißarmen Schienen aus gleitfähigem Kunststoffmaterial erfolgt.

16. Lastfahrzeug nach einem der Ansprüche 14 oder 15,
dadurch gekennzeichnet,
daß die die Stahlketten (47) verbindenden Querträger (48) aus korrosionsfestem Edelstahl gefertigt sind und daß an den Querträgern das Transportband (20) mittels korrosionsfesten Nieten (52) befestigt ist.

17. Fahrfahrzeug nach einem der Ansprüche 1 bis 16,
dadurch gekennzeichnet,
daß im Austrittsbereich der Entladeeinrichtung (21) am hinteren Umlenkbereich des Transportbandes (20) ein Abstreifer (53) mit einem daran angeschlossenen Leitblech vorgesehen ist.

18. Lastfahrzeug nach Anspruch 17,
dadurch gekennzeichnet,
daß der Abstreifer (53) zum Ausgleich bei Verschleiß über eine Langlochschiene von außen nachstellbar ausgebildet ist.

19. Lastfahrzeug nach einem der Ansprüche 1 bis 18,
dadurch gekennzeichnet,
daß vorne, oberhalb des vorderen Umlenkbereiches des Transportbandes der an sich bekannte Hohlraum als Stauraum (16a) ausgebildet ist.

20. Lastfahrzeug nach einem der Ansprüche 1 bis 19,
dadurch gekennzeichnet,
daS das gesamte Lastfahrzeug (100) in Vollaluminiumbauweise ausgeführt ist und einen nahezu vollständig geschweißten, selbständig tragenden Aufbau (11) aus AL-Mg2Mn 0,8 als Werkstoff aufweist, der bis zu 250 Grad Celsius hitzefest ist.
